# DEMANDE DE BREVET EUROPEEN

(11) **EP 1 688 272 A2**
(43) Date de publication de la demande: **09.08.2006**
(21) Numéro de dépôt: 06002037.7
(22) Date de dépôt: 01.02.2006
(51) Int. Cl.: B60B 21/06

(54) **Jante de roue et son procédé de fabrication**

(30) Priorité: 08.02.2005 FR 0501235
(71) Demandeur: Salomon S.A., 74370 Metz-Tessy (FR)
(72) Inventeur: Mercat, Jean-Pierre, 74650 Chavanod (FR); Mouzin, Olivier, 74210 Montmin (FR)

(57) **Abrégé**

La jante pour une roue de cycle comprend un profilé annulaire (13). Elle est caractérisée par le fait que le profilé annulaire présente au moins une rainure (15, 16) et qu'il, est cerclé à l'aide d'au moins un bobinage (19, 20) de fibre enduite d'une résine polymérisable logé dans la rainure.

L'invention concerne également un procédé de fabrication selon lequel on enroule le bobinage de fibre sur le profilé annulaire, ou on réalise le bobinage que l'on loge ensuite dans une rainure de la jante.

## Description

L'invention concerne une jante de roue pour un engin à roues. Notamment l'invention concerne une jante de roue pour un vélo. L'invention concerne également une roue pour un engin à roues comprenant la jante en question ainsi qu'un procédé de fabrication de la jante.

De façon connue une jante pour une roue de vélo est formée par un profil annulaire présentant vers l'intérieur des moyens d'accrochage pour des bâtons ou des rayons et vers l'extérieur un canal pour recevoir un pneu et le cas échéant une chambre à air.

Dans une roue à rayons classique la jante représente environ 60% du poids de la roue (pour une roue avant) et 90% de l'inertie.

On comprend dans ces conditions que les constructeurs ont cherché à concevoir des jantes légères et rigides.

Toutefois il faut souligner que la jante est un élément du vélo qui est très sollicité. En effet après le pneu c'est le composant qui est le plus proche du sol, et c'est lui qui subit après le pneu et transmet au reste du vélo les irrégularités du sol. Si le pneu est insuffisamment gonflé la jante peut venir au contact direct du sol.

En outre le pneu soumet la jante à des contraintes élevées du fait de la pression à laquelle il est gonflé.

En roulant, chaque tour de roue provoque un cycle de chargement sur chacun des rayons provoquant ainsi des cycles de fatigues. La jante est soumise par réaction à ces cycles de fatigue, il est donc nécessaire qu'elle soit suffisamment résistante pour résister à ces sollicitations de fatigue.

Enfin dans le cas d'un freinage au niveau des flancs latéraux de la jante, la jante doit dissiper la chaleur générée par le frottement des patins.

La conception d'une jante doit tenir compte de toutes ces contraintes.

De façon générale le profil utilisé pour la réalisation d'une jante se caractérise par sa rigidité et sa résistance.

La rigidité caractérise l'aptitude plus ou moins marquée à la déformation élastique. La rigidité d'un matériau s'évalue par son module d'élasticité (E). Plus le module est élevé plus le profil est rigide et moins il se déforme sous une charge donnée. La rigidité d'un profil s'évalue par le produit E x I de son module d'élasticité E par l'inertie (ou moment) quadratique I du profil.

La résistance caractérise la solidité du profil, c'est-à-dire la charge maximale que le profil peut supporter avant une déformation irréversible, ou encore la charge maximale avant rupture.

La rigidité et la résistance se caractérisent par ailleurs selon deux directions privilégiées. En premier lieu il y a la direction frontale, pour toute sollicitation tendant à déformer la jante dans le plan qu'elle définit. En second lieu il y a la direction latérale pour toute sollicitation tendant à déformer la jante transversalement au plan qu'elle définit.

Dans le domaine du vélo il existe deux grandes familles de jantes, les jantes pour boyaux collés et les jantes pour pneumatique, avec ou sans chambre à air.

En outre, pour les matériaux de la jante, on utilise de façon usuelle deux types principaux de matériau, d'un côté le métal, autrefois l'acier et maintenant un alliage d'aluminium, quelquefois le magnésium ou le titane, et de l'autre les matières composites, et notamment les fibres de carbone, d'aramide ou de fibres de verre noyées dans une matrice de résine.

Les jantes actuelles en alliage d'aluminium sont économiques, et elles sont bien adaptées au freinage par leurs propriétés de frottement et de conduction thermique.

Dans le domaine des jantes en alliage d'aluminium, des développements ont été entrepris dans le but de diminuer le poids des jantes.

Ainsi les demandes de brevet EP714792, EP7165001, EP1084868 décrivent des jantes allégées. Dans le premier cas la forme particulière du caisson de la jante permet de réduire l'épaisseur du pont inférieur. Dans le second cas l'utilisation d'un alliage plus performant permet d'obtenir une jante dont le poids est diminué à la suite d'une attaque chimique qui diminue globalement l'épaisseur de matière. Dans le troisième cas le pont inférieur est usiné entre les zones d'accrochage de rayons de façon à réduire l'épaisseur du pont dans ces zones où on a observé que les contraintes étaient relativement faibles.

Généralement les jantes en aluminium sont réalisées dans des alliages de la série 6000, et également de la série 7000. Ces alliages se différencient par la nature des charges qui sont ajoutées. Ces charges permettent d'améliorer les propriétés mécaniques de l'alliage, et donc de réduire l'épaisseur des parois du caisson de la jante.

Toutefois le module d'élasticité est quasiment constant pour tous les alliages d'aluminium, il est de l'ordre de 69 500 MPa (Mega Pascals) pour une densité de l'ordre de 2,7. Cela signifie que tous les alliages d'aluminium ont quasiment le même module. Les charges influent seulement sur la résistance de l'alliage. Donc une jante allégée réalisée avec un alliage haut de gamme sera plus résistante mais conservera sensiblement la même rigidité qu'une jante en alliage standard.

De plus, plus un alliage est chargé, plus il est difficile à extruder. Et la vitesse d'extrusion est directement liée à l'épaisseur de paroi. Dans ces conditions on comprend facilement que le fait d'utiliser des alliages d'aluminium plus chargés donne de bons résultats sur le plan de la résistance mais pas sur le plan de la rigidité et aboutit à des solutions techniques qui sont relativement complexes à mettre en oeuvre et qui sont finalement peu économiques.

Les matières composites ont l'intérêt d'avoir de très bonnes propriétés mécaniques et une très bonne résistance à la corrosion. A titre de comparaison le module d'un composite carbone époxy unidirectionnel varie entre 100 000 et 500 000 MPa (pour une densité de 1,6), en fonction du module propre des fibres et du taux de résine. Toutefois leur inconvénient réside dans leur coût, leurs propriétés médiocres de freinage en particulier sous la pluie et de conduction thermique, leur résistance médiocre aux sollicitations complexes comme c'est le cas dans une jante à pneu et une résistance médiocre aux chocs due à la faible résistance du composite au cisaillement.

Il existe aussi des jantes qui ont une partie métallique et une partie en matière composite. Ces jantes sont construites usuellement avec un cerceau extérieur métallique qui présente un canal annulaire pour le pneumatique et des logements pour l'accrochage des rayons, et un anneau intérieur en matière composite avec un profil élancé. L'anneau intérieur permet de diminuer le poids de la partie métallique tout en améliorant l'aérodynamisme de la jante.

Toutefois ces jantes sont relativement complexes à réaliser. En outre la contribution de la partie composite aux propriétés mécaniques de la jante n'est pas optimisée car on utilise des nappes de fibres bidirectionnelles.

On connaît aussi la jante décrite dans la demande de brevet US 6767070. Cette jante est formée par quatre anneaux qui sont reliés entre eux par des entretoises. Les rayons sont accrochés à ces entretoises. Cette jante présente une structure très originale, toutefois cette structure est peu rigide car les anneaux n'ont entre eux que des liaisons ponctuelles. Il n'existe pas de cohésion réelle de l'ensemble de la structure.

Compte tenu de cet art antérieur il existe un besoin pour une jante réalisée à partir d'un profilé qui à la fois soit facile à fabriquer, et à la fois présente des propriétés mécaniques améliorées par rapport aux jantes courantes actuelles.

A cet effet la jante selon l'invention comprend un profilé annulaire.

La jante est caractérisée par le fait que le profilé annulaire est cerclé à l'aide d'au moins un bobinage de fibre continue enduite d'une résine polymérisable présentant sur l'extérieur un canal annulaire prévu pour un pneumatique.

En d'autres termes l'invention propose de réaliser un profilé annulaire qui de préférence est dans un alliage d'aluminium classique et donc facile à extruder, et de renforcer les propriétés mécaniques du profilé par un ou plusieurs cerclages réalisés par un bobinage de fibre enduite de résine. Les fibres présentent un module d'élasticité nettement supérieur à celui du profilé annulaire pour une densité plus faible. Le bobinage ou les bobinages de fibre enduits de résine contribuent dans ces conditions à améliorer les propriétés mécaniques du profilé annulaire sous un poids réduit et à la fois la rigidité et la résistance de la jante. Dans le bobinage les fibres sont en permanence tangentes au profilé annulaire, leur efficacité est de ce fait très élevée en regard du poids additionnel qu'elles représentent.

L'invention sera mieux comprise en se référant à la description ci-dessous et aux dessins en annexe qui lui sont rattachés.

La figure 1 est une vue générale d'une roue.

Les figures 2 et 3 sont relatives à un premier mode de mise en oeuvre de l'invention.

Les figures 4, 5 et 6 montrent différents types de fibre.

La figure 7 illustre le mode de fabrication de la jante des figures 2 et 3.

Les figures 8a, 8b, 8c, 8d, 9a, 9b, 9c et 10a, 10b, 10c sont relatives à des variantes.

La figure 11 est relative à un autre mode de mise en oeuvre de l'invention.

La figure 12 schématise le processus de fabrication de la jante de la figure 11.

Les figures 13 à 19 sont relatives à des variantes de réalisation des jantes.

La figure 20 illustre schématiquement la fabrication de la jante de la figure 12.

La figure 21 montre une variante.

Les figures 22a, 22b, 22c et 23a, 23b illustrent des variantes de mise en oeuvre de l'invention.

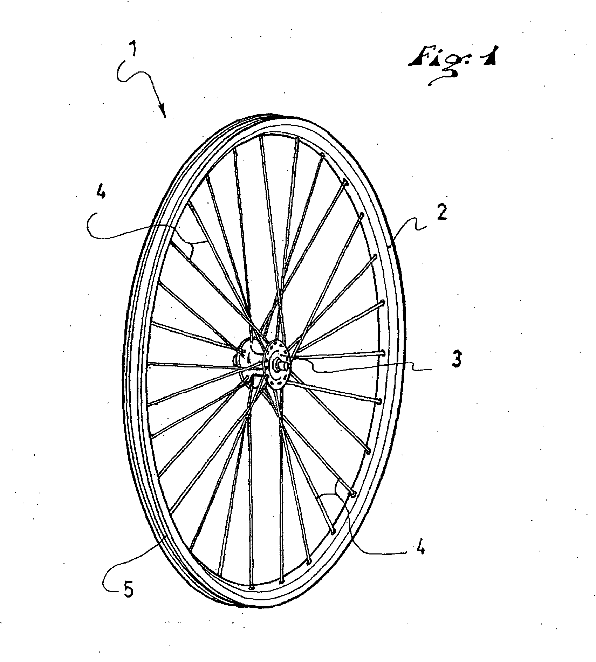

La roue 1 représentée dans la figure 1 présente de façon classique une jante annulaire 2, un moyeu central 3 et des rayons 4 de liaison entre la jante et le moyeu. La jante 2 a en plus à sa périphérie un canal annulaire 5 orienté vers l'extérieur pour recevoir selon les cas un boyau ou un pneumatique, avec ou sans chambre à air.

Pour une jante comme la jante 2, les principales contraintes mécaniques peuvent se décomposer de la façon suivante.

En premier lieu la tension des rayons induit sur le profil de la jante une compression élevée. Par exemple cette compression peut atteindre 70MPa pour une jante pesant 400g pour une roue de route et équipée de 28 rayons tendus à 120daN. Cette contrainte de compression réduit le développé de la jante de près de 2mm sur 2m environ de circonférence, soit 0.1%. Pour augmenter la rigidité en compression et donc atténuer la déformation en compression du profil, il faut augmenter le produit E x S du module d'élasticité par la surface en section du profil.

En second lieu il y a les contraintes de flexion, flexion frontale et flexion latérale.. La flexion frontale est induite par la tension des rayons et par la charge radiale à laquelle la jante est soumise du fait de la charge supportée par le moyeu et des irrégularités du sol. La flexion frontale engendre une contrainte de compression sur l'extérieur de la jante et une contrainte de traction sur la partie interne de la jante dans la zone d'application de l'effort. Entre les rayons la situation est inversée, l'extérieur de la jante est soumis à une contrainte de traction et l'intérieur à une contrainte de compression.

La flexion latérale est induite par les chocs latéraux subis par la jante.

Il y a en plus les contraintes résiduelles dues au cintrage de la jante. Lors de l'opération de cintrage en effet les galets viennent plastifier la jante pour lui donner sa courbure. Cette opération étire la zone externe de la jante et comprime la zone interne, ce qui génère des contraintes résiduelles de compression dans la zone externe et des contraintes résiduelles de traction dans la zone interne de la jante.

Enfin il y a les contraintes dues au gonflage du boyau ou du pneu. Un boyau présente l'avantage de ne pas solliciter la jante du fait de son gonflage. Par contre un pneu exerce du fait de son gonflage une contrainte de flexion sur les ailes et une contrainte de compression induite par l'action de la pression du pneu sur le fond de la jante.

Ces différentes contraintes se superposent de façon statique et dynamique sur toute la périphérie de la jante.

Il ressort de ceci que la zone de fragilité d'une jante est très souvent la zone externe qui subit la superposition de toutes ces contraintes de compression.

L'idée de départ de l'invention est de renforcer la jante, et de préférence sa zone externe par au moins un cerclage en fibre.

Les figures 2 à 4 sont relatives à un premier mode de mise en oeuvre de l'invention.

Le profil de jante qui est représenté dans ses figures est du type à boyau avec un pont supérieur 9 orienté vers l'extérieur de la jante qui est relativement peu creusé pour former un canal de réception d'un boyau traditionnel. En outre le profil de jante comprend un pont inférieur 10 orienté vers le moyeu et deux parois latérales 11 et 12. L'ensemble forme un caisson.

La jante représentée comprend un cerceau 13 en alliage métallique, notamment en alliage d'aluminium.

Le cerceau fournit le pont inférieur, les deux parois latérales et la plus grande partie du pont supérieur du caisson de la jante.

Le cerceau fournit également les moyens d'accrochage des rayons. Tout moyen approprié convient Notamment les deux ponts peuvent être percés comme cela se fait usuellement, et les rayons sont retenus à l'aide d'écrous de rayon logés à l'intérieur du caisson éventuellement avec des oeillets additionnels, ou bien le pont inférieur est percé, le pont supérieur n'est pas percé et les rayons sont accrochés par l'intermédiaire de vis creuses vissées dans le pont inférieur comme cela est décrit dans la demande de brevet EP818328, ou tout autre moyen approprié. On pourrait aussi accrocher les rayons aux parois latérales du caisson comme cela est également connu.

Au niveau du pont supérieur le profil du cerceau forme deux rainures 15 et 16 qui se trouvent le long des bords du pont supérieur et qui ont une ouverture orientée vers l'extérieur. Les rainures définissent deux volumes annulaires qui sont inclus dans le volume hors tout défini par le caisson de la jante et qui sont en retrait selon une direction radiale par rapport au pneumatique. Par exemple comme on peut le voir dans la figure 2 la paroi du cerceau qui forme le pont supérieur 9 est interrompue à proximité des parois latérales, et elle est prolongée par deux parois de raccordement 17 et 18 qui rejoignent les parois latérales en retrait par rapport au sommet de ces parois. Ainsi les parois de raccordement et les parties supérieures des parois latérales délimitent les deux rainures.

De façon avantageuse les rainures sont réalisées lors de l'opération d'extrusion de la barre métallique qui est ensuite cintrée pour former le cerceau. Les rainures sont formées par le profil de la filière d'extrusion. Comme les rainures sont ouvertes en section elles ne compliquent en rien l'opération d'extrusion.

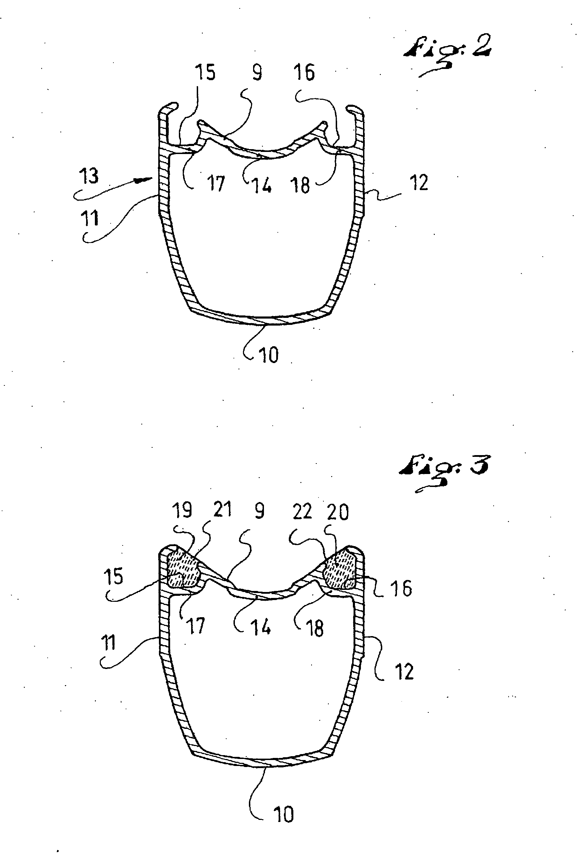

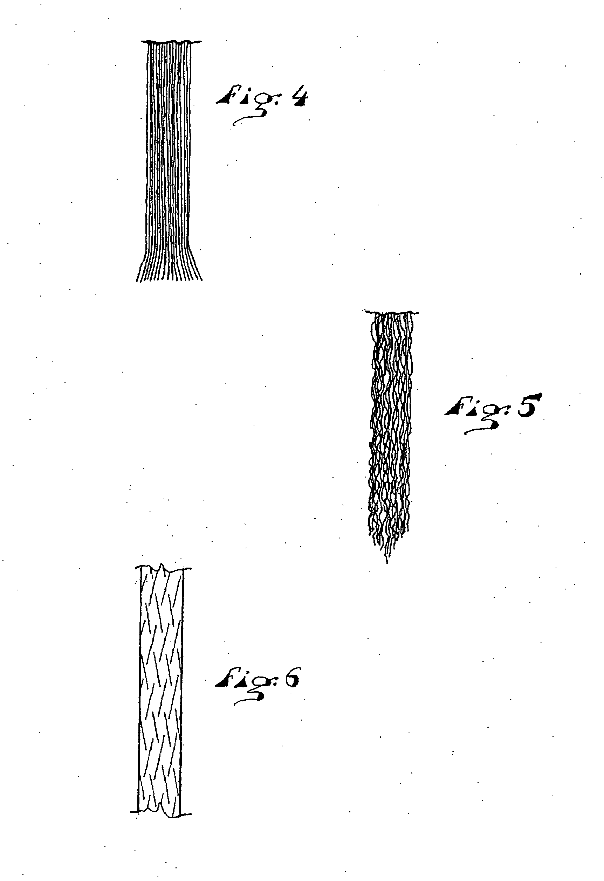

Comme cela est représenté en figure 3 les deux rainures sont comblées avec deux bobinages 19 et 20. Les bobinages sont formés par des enroulements d'une fibre continue par exemple une fibre de verre de carbone ou d'aramide qui est noyée dans une matrice de résine. Les fibres sont formées par exemple par des mèches de filaments de carbone continus. Une telle mèche est représentée en figure 4. Elle peut comprendre entre plusieurs dizaines et plusieurs milliers de filaments. Selon une autre variante illustrée en figure. 5, la fibre est formée par une multitude de fils craqués, c'est-à-dire de fils élémentaires ayant une longueur de quelques centimètres qui sont enchevêtrés les uns avec les autres à la manière d'une corde.

Selon une autre variante illustrée en figure 6, la fibre est formée par une tresse où tous les filaments sont orientés selon une direction proche de la direction longitudinale définie par la fibre.

D'autres modes de réalisation de la fibre peuvent aussi convenir.

La résine est de tout type approprié, notamment une résine de type polyester ou époxy. La résine peut être de type thermodurcissable ou thermoplastique.

Les bobinages remplissent le volume des rainures et on s'arrange pour que leur face 21 et 22 qui est visible par l'ouverture des rainures vienne en continuité avec la paroi 14 du cerceau jusqu'au sommet des parois latérales pour former le pont supérieur de la jante.

L'encastrement des bobinages dans des rainures du profilé annulaire assure une bonne cohésion de ces éléments et une bonne transmission des efforts entre la partie métallique et la partie composite. De préférence comme cela est visible dans les figures 2 et 3, l'ouverture vers l'extérieur des rainures est resserrée par des petits rebords de paroi pour renforcer l'encastrement des bobinages dans les rainures.

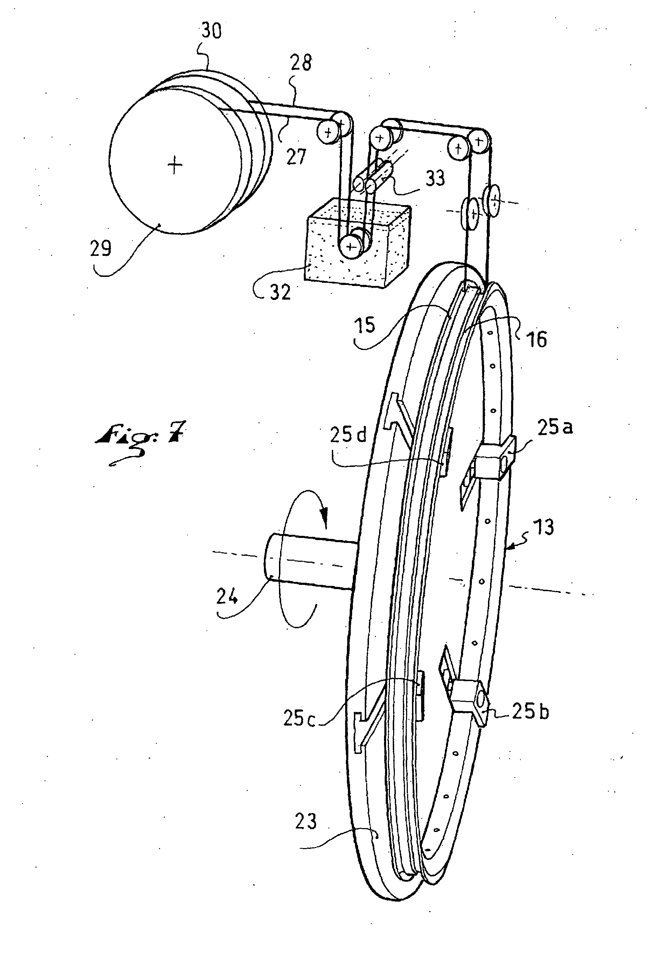

La figure 7 illustre de façon schématique un mode de réalisation des bobinages 19 et 20.

Selon ce mode de réalisation, le cerceau 13 est monté sur un plateau 23 qui est mobile en rotation par l'intermédiaire d'un arbre 24. Par exemple le cerceau est immobilisé sur le plateau à l'aide de taquets 25a, 25b, 25c, 25d qui sont mobiles selon des directions radiales par rapport à l'axe de l'arbre 24.

Deux brins de fibre 27 et 28 sont tirés depuis des rouleaux d'alimentation 29 et 30. Les brins sont détournés par exemple à l'aide de galets de renvoi dans une cuve 32 remplie de résine de façon à les imprégner de résine, puis ils sont guidés de nouveau par des galets de renvoi pour être présentés respectivement dans le plan de chacune des rainures. En sortie de la cuve on peut prévoir un dispositif d'essorage 33, par exemple deux rouleaux pressés l'un contre l'autre pour évacuer un excédent éventuel de résine. Les fibres sont de préférence sous tension de façon à compacter les fibres et la résine. Tout moyen approprié convient pour maintenir cette tension. Et c'est pour former les bobinages sous tension que les rainures sont ici ouvertes vers l'extérieur.

Pour réaliser les bobinages on immobilise le cerceau sur le plateau, on attache l'extrémité des fibres au cerceau, par tout moyen approprié. Par exemple on colle les extrémités au fond des rainures à l'aide d'un adhésif, ou bien on enfile les extrémités dans un trou ou une fente prévue à cet effet sur le cerceau, d'autres moyens peuvent aussi être utilisés. Une fois que les extrémités des fils sont accrochées au cerceau on entraîne le plateau en rotation pour réaliser les bobinages 20 et 21. Une fois les bobinages réalisés les fibres sont coupées et les extrémités sont arrêtées par tout moyen approprié, par exemple un adhésif.

Pour faciliter le remplissage des rainures, on peut animer d'un petit mouvement axial alternatif les galets de renvoi qui distribuent les fibres en final pour que les enroulements aient tendance à se placer les uns à côté des autres et non les uns au-dessus des autres.

Ensuite la résine polymérise. Selon la nature de la résine utilisée, la polymérisation se fait à température ambiante ou bien elle est accélérée par un chauffage externe. La chaleur peut être apportée par tout moyen approprié, par exemple le cerceau de la jante peut être chauffé avant l'opération de bobinage, ou bien on peut utiliser des rampes de chauffage infrarouge ou encore on peut réaliser une cuisson dans un four. De préférence au cours de la polymérisation de la résine on maintient la jante dans un mouvement de rotation pour éviter une concentration locale de résine sous l'effet de la gravité.

Une fois la résine polymérisée il est possible d'envisager une opération de finition au niveau des faces 21 et 22 qui forment une partie du pont supérieur. Par exemple on réalise un usinage superficiel, un tel usinage peut détériorer certains enroulements superficiels, mais il n'affecte pas la structure générale du bobinage. On peut aussi faire une enduction superficielle de résine ou tout autre matière appropriée pour égaliser les irrégularités éventuelles des faces 21 et 22.

Aussi on peut jouer sur la distribution des fibres, notamment en contrôlant le déplacement axial des galets de renvoi qui distribuent les fibres en final pour réduire la formation des irrégularités.

Les bobinages sont formés d'environ 60% de fibres et 40% de résine en volume en fonction du compactage. En outre un bobinage comprend au minimum un enroulement de fibres additionné d'une portion de recouvrement. De préférence il comprend au minimum deux enroulements pour assurer la continuité du cerclage et éviter un balourd local. Le nombre d'enroulements dépend de la nature et de la grosseur de la fibre. Pour le mode de réalisation représenté, avec une mèche de 12000 filaments on compte une dizaine d'enroulements. L'ensemble de ces chiffres est donné uniquement à titre indicatif.

De nombreuses variantes sont possibles. Au lieu de fibres enduites de résine par voie humide on pourrait utiliser des fibres comprenant un mélange de fibres sèches et de fibres de matière thermoplastique que l'on réchauffe en sortie du rouleau d'alimentation, ou encore des fibres préimprégnées de résine polymérisée dont la réaction de polymérisation est bloquée par une conservation à basse température.

Au lieu d'entraîner le cerceau en rotation on pourrait le maintenir immobile et avoir une distribution rotative des fibres qui forment les bobinages.

On pourrait aussi réaliser les deux bobinages séparément, ou encore depuis des rouleaux et des systèmes d'alimentation situés de chaque côté du cerceau.

On pourrait aussi réaliser les bobinages en plusieurs parties et par exemple enrouler simultanément ou successivement deux fibres ou plus dans un même bobinage. Cependant on préfère préserver la continuité de la fibre sur l'ensemble du bobinage.

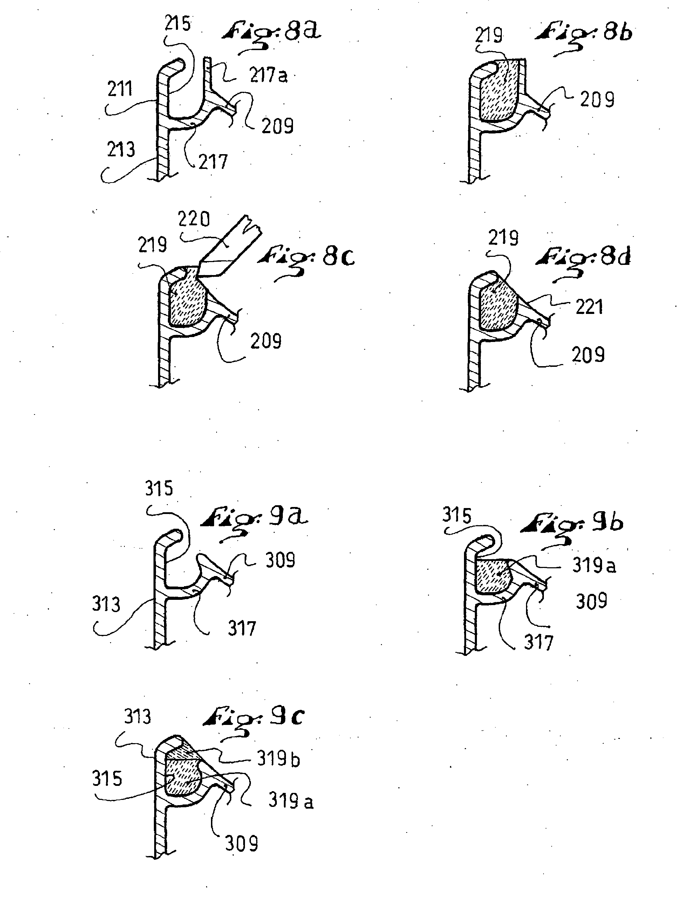

Selon la variante illustrée dans les figures 8a à 8d, les rainures du cerceau 213, et en particulier la rainure 215 qui est représentée est délimitée d'un côté par la paroi latérale 211 du profil annulaire et de l'autre par la paroi 217 et une extension 217a de la paroi de raccordement 217 qui s'élève au-delà du pont 209 jusqu'à la hauteur de la paroi latérale 211. En d'autres termes la rainure 215 présente en section une forme de "U" dont les parois latérales ont la même profondeur.

Le volume de la rainure 215 est rempli avec les enroulements d'une fibre enduite de résine pour former un bobinage 219 jusqu'au sommet de ses parois latérales.

Après polymérisation de la résine, l'extension 217a et la partie supérieure du bobinage 219 est usinée, par exemple à l'aide d'un outil de coupe de tournage 220 pour former une surface supérieure 221 en continuité avec la surface supérieure du pont 209.

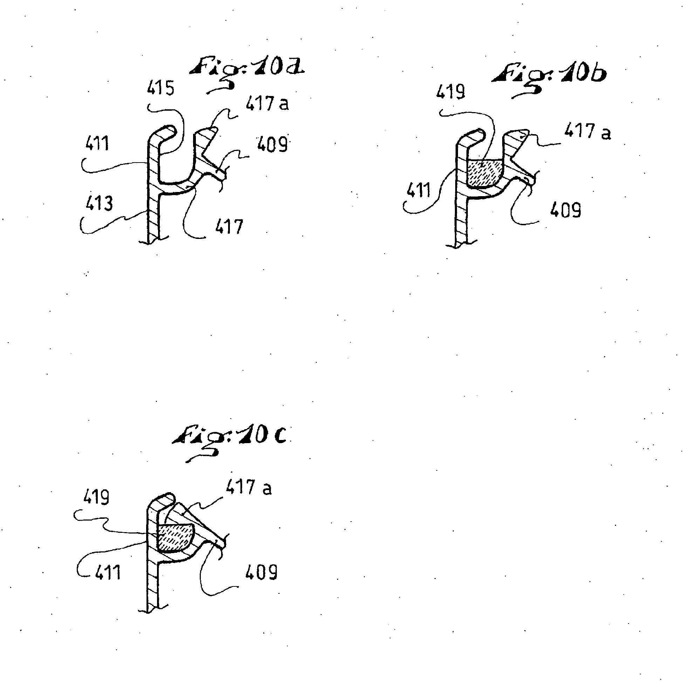

Selon la variante illustrée dans les figures 9a à 9c, le profil du cerceau annulaire 313 est le même que celui décrit en figure 2.

La rainure 315 est remplie avec un cerclage réalisé en deux parties. La première partie 319a est formée par les enroulements d'une fibre enduite de résine. Cette première partie comble le volume de la rainure jusqu'au sommet de la paroi intermédiaire 317 à sa jonction avec le pont supérieur 309.

Une seconde partie 319b est ensuite rapportée pour combler le volume restant de la rainure et assurer la continuité du pont supérieur entre le sommet de la paroi intermédiaire 317 et le sommet de la paroi latérale 313.

Cette partie 319b est par exemple réalisée en résine, ou encore en une matière plastique thermoformable à la manière d'un fond de jante ou en tout autre matériau approprié.

Selon la variante illustrée dans les figures 10a à 10c, la paroi intermédiaire 417 a une extension 417a qui s'étend parallèlement à la paroi latérale 411 du cerceau 413. La rainure 315 ainsi formée est remplie partiellement par le bobinage 419 ainsi que le montre la figure 10b, puis l'extension 417a est rabattue au-dessus du bobinage pour refermer l'ouverture de la rainure 415 et assurer la continuité du pont supérieur 409 jusqu'au sommet de la paroi latérale 411.

L'intérêt principal de ces différentes variantes est de concilier au mieux le remplissage des rainures avec les bobinages, et la présence au niveau de l'ouverture des rainures d'une surface inclinée relativement à la direction axiale du cerceau pour former la paroi d'appui du boyau.

Ainsi réalisés les bobinages de fibres forment des cerclages qui renforcent à la fois la rigidité et la résistance de la jante selon les deux directions frontale et latérale compte tenu du fait que les cerclages ont un module d'élasticité nettement supérieur à celui de l'alliage d'aluminium, que les bobinages sont encastrés dans des rainures du cerceau et qu'ils forment avec lui une structure composite mais totalement cohérente par adhésion

On peut donc obtenir des caractéristiques élevées de résistance et de rigidité à l'aide d'un cerceau réalisé dans un alliage standard qui est renforcé par de tels cerclages par exemple en fibres de carbone. Le carbone ayant un module et une résistance plus élevés que ceux de l'aluminium et une densité plus faible on peut aisément fabriquer une jante plus rigide et plus résistante qu'une jante qui serait réalisée entièrement en alliage métallique de même qualité ou de qualité supérieure. De façon corrélative, on peut construire une jante plus légère ayant des propriétés mécaniques équivalentes ou supérieures à une jante traditionnelle en alliage,
ou bien en diminuant la masse d'aluminium, ou bien en réduisant le nombre de rayons.

L'alliage du cerceau étant un alliage standard, on peut extruder un profil avec des parois d'épaisseur réduite sous une vitesse élevée. Donc économiquement le résultat est positif.

On a déterminé par calcul les propriétés d'une jante ayant le profil représenté en figure 3.

| | Jante de référence 100%d'aluminium | Jante selon l'invention | | |
|---|---|---|---|---|
| | | aluminium | composite carbone/époxy | global |
| Masse (grammes) | 371 | 313 | 56,6 | 369,6 |
| Densité relative d | 2,7 | 2,7 | 1,5 | 2,41 |
| Module E(MPa) | 69500 | 69500 | 105000 | |
| Résistance (MPa) | 290 | 290 | 1000 | |
| E/d | 25740 | 25740 | 70000 | |
| Allongement % | 0,42 | 0,42 | 0,95 | |
| E x S (106N) | 4,62 | 4,18 | 2,01 | 6,19 |
| Ei latéral (N.m²) | 209,9 | 236 | 121,9 | 657,9 |
| Ei frontal (N.m²) | 236,6 | 188,4 | 1,8 | 261,9 |
| Mf latéral (N.m) | 103,9 | 98,5 | | 149,3 |
| Mf frontal (N.m) | 76,4 | 68,7 | | 79,2 |

Pour ce tableau, le Module est caractéristique de la rigidité du matériau.

La résistance est la résistance élastique du matériau.

E / d désigne le module spécifique du matériau, c'est-à-dire le module rapporté à la densité.

L'allongement est l'allongement élastique maximum avant déformation irréversible.

E x S désigne le produit du module E par la surface en section du profil, il est caractéristique de la rigidité en compression du profil.

Ei latéral désigne la rigidité en flexion latérale du profil.

Ei frontal désigne la rigidité en flexion frontale du profil.

Mf latéral désigne la résistance en flexion latérale du profil.

Mf frontal désigne la résistance en flexion frontale du profil.

Ce tableau montre que les propriétés mécaniques de la jante sont améliorées globalement par rapport à une jante traditionnelle ayant un poids équivalent. En particulier on peut remarquer que le produit E x S passe de 4,62 à 6,19 soit une augmentation de 34% pour la résistance à la compression. Ce produit pourrait être encore amélioré par l'utilisation de fibres de carbone de plus haut module qui pourraient faire passer le module d'élasticité du composite de 105 000 à 300 000 MPa.

La rigidité latérale de la jante est augmentée de près de 70% et la rigidité frontale de près de 10% pour ce qui concerne le profil de la jante nue. En effet les rayons jouent également un rôle dans la rigidité latérale et frontale de la roue.

Egalement on peut constater des augmentations significatives de la résistance frontale et latérale.

L'important est cependant l'augmentation de la rigidité du profil qu'on ne pouvait pas obtenir jusqu'à présent avec un alliage plus ou moins chargé.

Le nombre et la position des cerclages ne sont pas limitatifs. Toutefois on préfère placer les cerclages dans la partie haute de la jante, c'est-à-dire la partie la plus éloignée du centre de gravité de la section du profil. En effet on sait, en relation avec le théorème de Huyghens, que le moment quadratique d'une surface par rapport à un point varie avec le carré de la distance par rapport à ce point. C'est donc dans cette zone que l'efficacité des cerclages est la plus sensible. En outre c'est dans cette zone également que les contraintes sur la jante sont les plus élevées.

La figure 11 est relative à une variante de mise en oeuvre de l'invention. La jante a un cerceau 33 qui est pourvu de quatre rainures 37, 38, 39, 40 ouvertes vers l'extérieur et disposées aux quatre sommets de la section du profil. Les deux rainures supérieures sont sur les bords du pont supérieur 41 à sa jonction avec les parois latérales 34, 35 et les deux rainures 39 et 40 en extension sur chacun des côtés du pont inférieur 42 au niveau de deux renfoncements que le profil de la jante présente dans cette zone.

Chaque rainure loge un bobinage 43, 44, 45, 46 de fibre enduite de résine, notamment dé fibre de carbone. Chaque bobinage remplit le volume dé la rainure, en particulier les bobinages supérieurs 43 et 44 pour fournir au niveau du pont supérieur une surface extérieure en continuité avec celle du cerceau. Les bobinages forment des cerclages qui encerclent le cerceau métallique et de ce fait renforcent la structure de la jante.

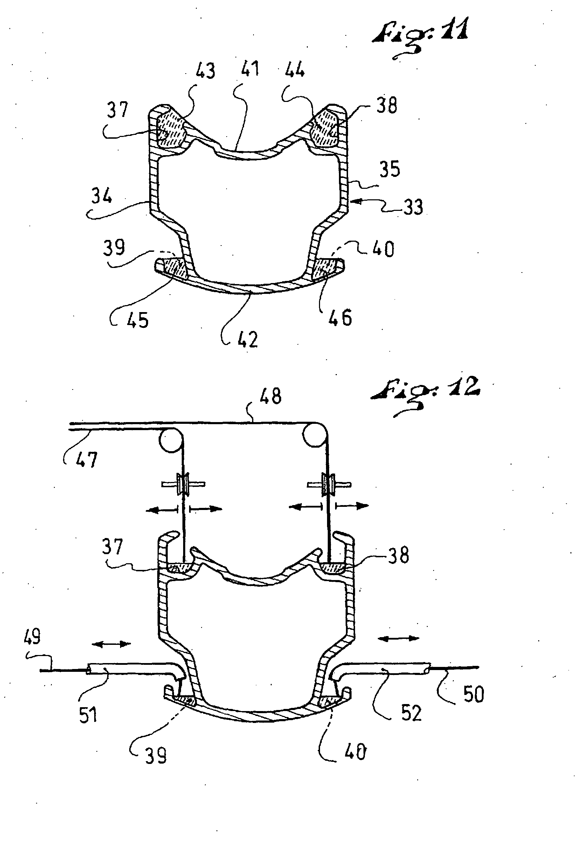

La figure 12 illustre un mode de fabrication de la jante de la figure 11. Selon ce qui est représenté les deux bobinages qui sont formés dans les rainures supérieures 37 et 38 sont réalisés chacun à partir d'un brin de fibre 47, 48 qui est guidé par des galets de renvoi. Pour les bobinages des rainures 39, 40 les brins de fibres 49, 50 sont guidés par des canules 51, 52 dont l'extrémité est engagée dans le renfoncement du profil pour se trouver dans le plan radial de la rainure.

Comme cela est suggéré dans la figure par les flèches doubles, les galets de renvoi et les canules peuvent être animés d'un mouvement alternatif pour assurer un remplissage régulier des rainures avec les enroulements du bobinage.

Les quatre bobinages peuvent ici être réalisés simultanément ou deux par deux ou individuellement, ou bien en entraînant le cerceau de la jante en rotation, ou bien en faisant tourner les moyens d'alimentation en fibres autour du cerceau de la jante.

Par rapport au mode de réalisation précédent les deux bobinages additionnels améliorent encore les propriétés mécaniques de la jante. En effet les cerclages sont situés le plus loin possible du centre de gravité de la section, de ce fait leur moment quadratique par rapport au centre de gravité est optimum.

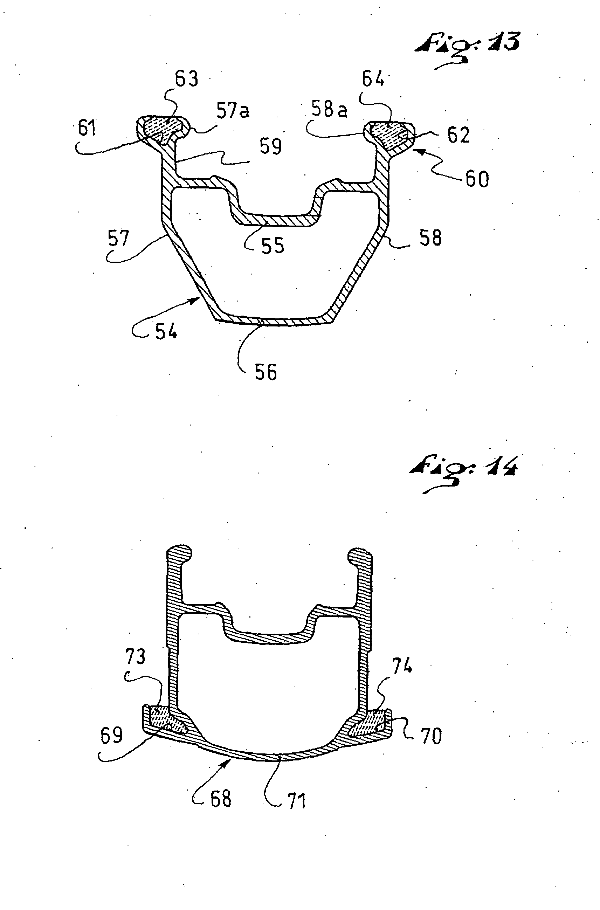

Les figures 13 et suivantes montrent des profilés de jante qui sont utilisables avec des pneus traditionnels, avec ou sans chambre à air.

De façon générale un tel profil comme le profil 54 représenté en figure 13 comprend un caisson formé par un pont supérieur 55 orienté vers l'extérieur, un pont inférieur 56 orienté vers le moyeu et deux parois latérales 57, 58. Les deux parois latérales se prolongent au-delà du pont supérieur par des ailes pour former avec lui un canal de réception du pneu 59. Les parois latérales 57, 58 ont un bourrelet 57a, 58a à leur sommet qui est orienté vers l'intérieur du canal et qui contribue à maintenir en place les flancs du pneu.

Le dessin montre un pont supérieur avec un profil conforme à ce qui est décrit dans la demande de brevet EP894380. Toutefois un tel profil est préféré, mais tout autre profil approprié peut aussi convenir.

Selon le mode de réalisation représenté le profil de la jante comprend un cerceau métallique 60 avec deux rainures 61 et 62 situées au sommet des ailes et ouvertes vers l'extérieur de la jante. Avantageusement une partie de la paroi des rainures forme les bourrelets précédemment décrits.

Les deux rainures sont remplies avec des bobinages 63, 64 de fibre enduite de résine. La fibre est de tout type approprié, par exemple une fibre de carbone, ou d'aramide, et la résine est de type thermoplastique ou thermodurcissable. Les bobinages sont réalisés avec une fibre continue, ou peuvent être réalisés en plusieurs morceaux. Les bobinages forment des cerclages qui renforcent la structure de la jante.

De plus les bobinages renforcent la structure au niveau des sommets des ailes qui sont des zones particulièrement sollicitées. L'augmentation de volume des sommets des ailes diminue également les risques de crevaison par pincement.

Selon le mode de réalisation de la figure 14 le pont inférieur 71 du cerceau 68 est prolongé latéralement par deux gouttières 69, 70 qui forment deux rainures. Les bobinages 73 et 74 sont bobinés dans les rainures pour former deux cerclages au niveau du pont inférieur de la jante.

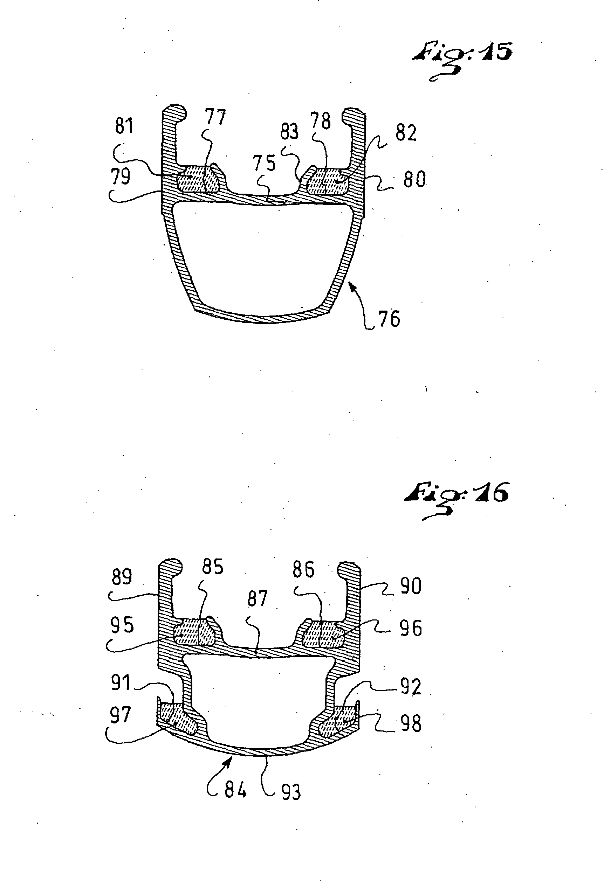

Selon le mode de construction illustré en figure 15 c'est le pont supérieur 75 du cerceau 76 qui présente deux rainures 77 et 78 le long des parois latérales 79 et 80. Les deux rainures ont leur ouverture orientée vers l'extérieur de la jante et elles reçoivent les deux bobinages de fibres 81 et 82.

De façon avantageuse dans ce cas les deux rainures délimitent une gorge centrale 83 qui est utile pour le montage du pneu. En outre, une fois le pneu monté les deux bobinages ne-sont plus visibles. Avec un tel profil on peut réaliser facilement les bobinages, en outre les surfaces de freinage des parois latérales et la forme extérieure du profil ne sont pas affectées par la présence des rainures.

La figure 16 est relative à une variante de construction. Le cerceau métallique 84 a quatre rainures, deux rainures 85, 86 au niveau du pont supérieur 87, le long des parois latérales 89, 90 et deux rainures 91, 92 formées par des extensions en forme de gouttière du pont inférieur 93. Chacune des rainures loge un bobinage de fibre noyée dans de la résine, respectivement 95,96,97,98.

Selon le mode de construction illustré en figure 17 le cerceau métallique 100 de la jante a trois rainures, deux rainures 101 et 102 situées au sommet des ailes 103, 104 et une rainure 105 située dans la partie inférieure du profil par une extension en forme de point d'interrogation retourné pour avoir une ouverture orientée vers l'extérieur du cerceau. Un bobinage, respectivement 106, 107, 108 est logé dans chacune des rainures pour former trois cerclages d'armature du cerceau.

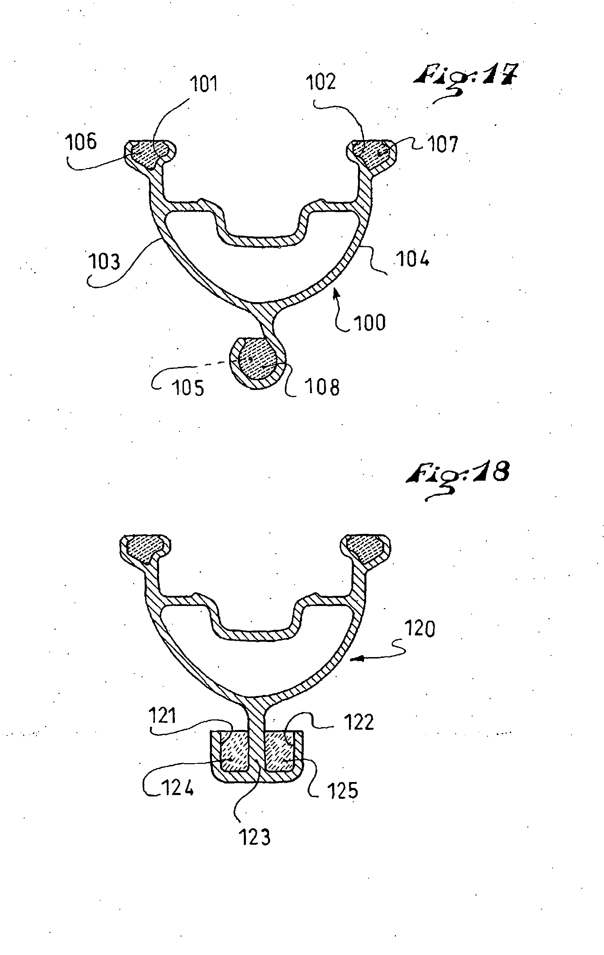

En variante la figure 18 représente un cerceau métallique 120 avec une double rainure 121/122 située dans la partie inférieure du profil de chaque côté d'une nervure médiane 123 située dans le plan médian de la jante et orientée vers le centre de la jante. La double rainure reçoit deux enroulements de fibre 124 et 125.

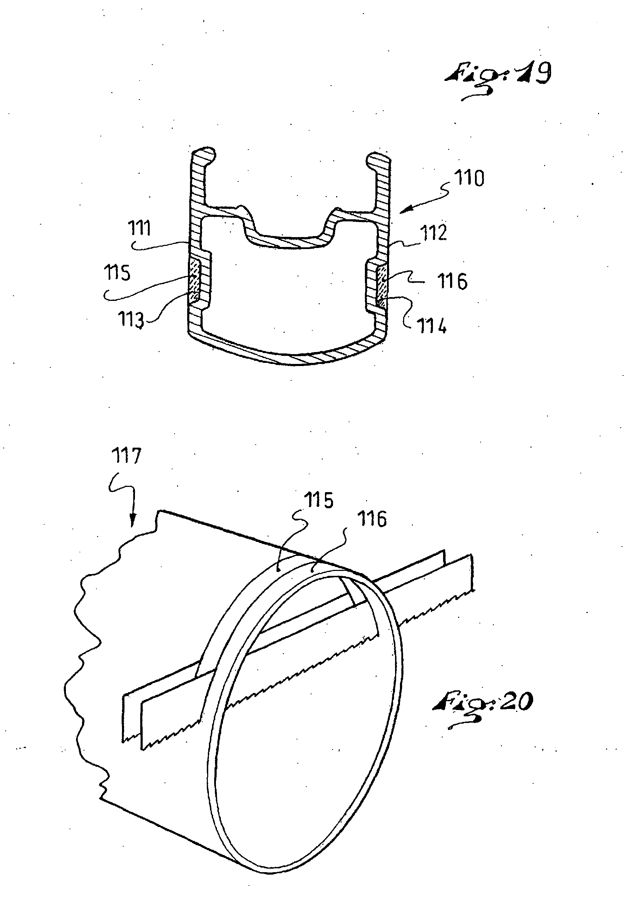

Les figures 19 et 20 sont relatives à une variante de mise en oeuvre de l'invention.

Au lieu d'être bobinés sur le cerceau métallique, les bobinages sont préparés à l'avance et placés ensuite dans des logements du cerceau.

Ainsi la figure 19 représente un cerceau 110 dont les parois latérales 111 et 112 ont chacune un renfoncement 113, 114 qui débouche non pas vers l'extérieur de la jante mais vers chacun de ses côtés. Les renfoncements forment des rainures où des bobinages 115, 116 sont logés. Par exemple comme cela est représenté schématiquement dans la figure 20, les bobinages sont obtenus par la découpe en tranches d'un tube 117. Les tranches ont des dimensions correspondant aux dimensions des deux rainures. Par exemple le tube est réalisé à partir d'une ou plusieurs fibres de carbone ou autre matériau approprié qui est enroulée sur un mandrin.

Une fois découpées les tranches sont logées dans les rainures, et elles sont assemblées par tout moyen approprié, par exemple au moyen de colle ou de résine. Eventuellement les parois latérales peuvent être ensuite dressées par une opération d'usinage.

Au lieu d'une tranche chacun des cerclages pourrait être formé par plusieurs tranches emboîtées les unes dans les autres, le diamètre extérieur d'une tranche étant sensiblement égal au diamètre intérieur de la tranche suivante.

Les tranches forment des cerclages qui renforcent la structure de la jante.

La figure 21, illustre une variante de réalisation des bobinages 115 et 116. Cette variante met en oeuvre un mandrin 125 formé par une pluralité d'éléments épaulés 126, 127, 128, 129. Chaque élément a un noyau central 126a, 127a, 128a, 129a autour duquel est formé le bobinage et un disque 126b, 127b, 128b, 129b qui délimite la rainure dans laquelle un bobinage est formé en s'appuyant sur le disque et le disque de l'élément adjacent.

Les bobinages sont formés simultanément ou en continu les uns à la suite des autres. Dans ce dernier cas, lorsqu'une rainure est pleine de fibres, on fait franchir le disque à la fibre pour l'amener dans la rainure suivante. Lorsque les bobinages sont réalisés on désassemble les éléments du mandrin et on démoule les bobinages de leur élément respectif pour les mettre en place, ensuite dans les rainures du cerceau métallique.

Le nombre des éléments pour un mandrin n'est pas limitatif.

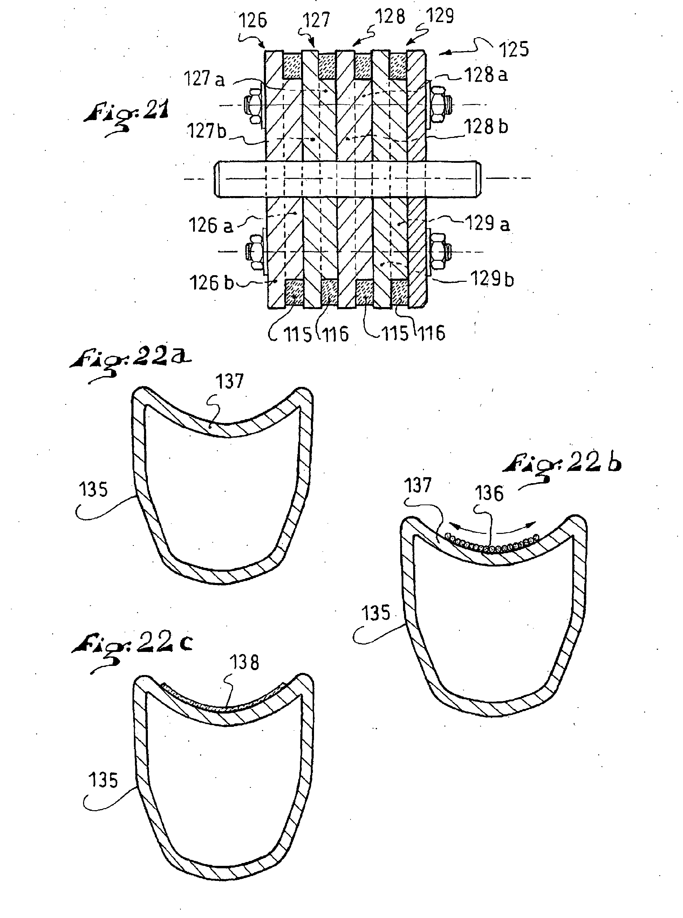

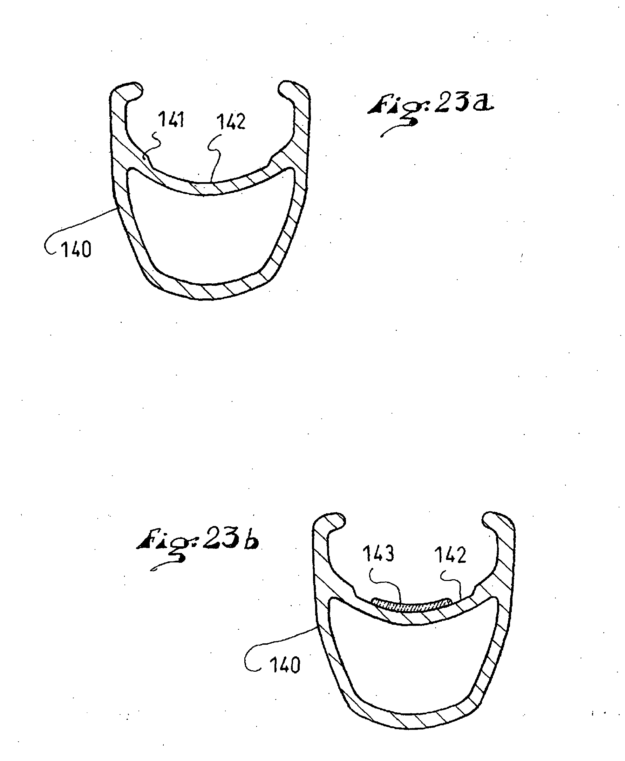

Les figures 22a à 22c et 23a, 23b illustrent les cas où le profil du cerceau métallique n'a pas de rainure aménagée pour recevoir un bobinage de fibre.

Selon la figure 22a le cerceau 135 a un profil qui est prévu pour une jante à boyau, il est donc de même forme générale que le profil des figures 2 et 3 mis à part l'absence des rainures.

Une fibre 136 est enroulée sur le pont 137 en profitant de sa forme concave. Par exemple la fibre se présente sous forme de mèche ou de tresse et elle est bobinée depuis le fond du pont supérieur vers chacune des parois latérales.

En final comme cela est illustré en figure 22c la fibre forme un bobinage continu 138 qui tapisse la paroi du pont supérieur. Ce bobinage forme un cerclage qui renforce la structure du cerceau métallique.

Selon la figure 23a, la cerceau métallique 140 a en section la forme usuelle prévue pour une jante à pneu, avec en particulier un pont supérieur 141 présentant une gorge médiane 142 prévue pour le montage du pneu. Dans ce cas le bobinage 143 est réalisé au fond de la gorge 142 pour former le cerclage de renforcement.

Pour ces deux cas la position des cerclages n'est pas optimale, ils sont en effet relativement proches du centre de gravité de la section. Toutefois leur contribution à l'amélioration des propriétés mécaniques de la jante est significative particulièrement en compression. Ils présentent en outre l'avantage de mettre en oeuvre des formes traditionnelles de profilé métallique. Il pourra être intéressant toutefois d'accentuer la concavité du pont supérieur pour le profil 135 et la profondeur de la gorge pour le profil 140.

Naturellement la présente description n'est donnée qu'à titre indicatif et l'on pourrait adopter d'autres mises en oeuvre de l'invention sans pour autant sortir du cadre de celle-ci.

En particulier l'invention n'est pas limitée au domaine des roues à rayons en traction, elle s'applique également aux roues à bâtons et même aux roues pleines qui comprennent un cerceau périphérique en alliage métallique. L'invention peut aussi s'appliquer aux jantes ou aux roues moulées, les rainures pourraient alors être réalisées lors de l'opération de moulage ou ultérieurement par une opération ultérieure d'usinage.

Egalement on pourrait utiliser d'autres fibres que des fibres en carbone, et par exemple des fibres de verre, d'aramide PBO, PIPD ou autre, pourvu que leur module spécifique (c'est-à-dire le module ramené à la densité) soit supérieur à celui du cerceau de la jante.

## Revendications

1. Jante pour une roue d'un cycle, comprenant un profilé annulaire (13, 213, 313, 413, 33, 54, 60, 68, 76, 84, 100, 110, 120, 135, 140) présentant sur l'extérieur un canal annulaire prévu pour recevoir un pneumatique, **caractérisée par le fait que** le profilé annulaire est cerclé à l'aide d'au moins un bobinage (19,20,219,319, 419,43,44,45,46,63, 64,73,74, 81, 82, 95, 96, 97, 98, 106, 107, 108, 115, 116, 124, 125 138, 143) de fibre continue enduite d'une résine polymérisable.

2. Jante selon la revendication 1, **caractérisée par le fait que** chaque bobinage (19, 219, 319, 419, 20, 43, 44, 45, 46, 63, 64, 73, 74, 81, 82, 95, 96, 97, 98, 106, 107, 108, 115, 116, 124, 125) est logé dans une rainure (15, 215, 315, 415, 16, 37, 38, 39, 40, 61, 62, 69, 70, 81, 82, 85, 86, 91, 92, 101, 102, 105, 113, 114, 121, 122) du profilé annulaire (13, 213, 313, 413, 33, 54, 68, 76, 84, 100, 110).

3. Jante selon la revendication 2, **caractérisée par le fait que** chaque rainure (15, 215, 315, 415, 16, 37, 38, 39, 40, 61, 62, 69, 70, 81, 82, 85, 86, 91, 92, 101, 102, 105, 121, 122) a une ouverture orientée vers l'extérieur du profilé annulaire.

4. Jante selon la revendication 2 ou 3, où le profilé annulaire (13, 33, 76, 84) comprend un caisson avec un pont inférieur (10, 42, 93) orienté vers l'intérieur de la jante, un pont supérieur (14, 41, 75, 87) orienté vers l'extérieur de la jante et deux parois latérales (11, 12, 34, 35, 79, 80, 89, 90), **caractérisée par le fait que** le profilé présente deux rainures (15, 16, 37, 38, 77, 78, 85, 86) sur les bords du pont supérieur et que chacune des rainure loge un bobinage (19, 20, 43, 44, 81, 82, 95, 96) de fibre enduite de résine.

5. Jante selon la revendication 2 ou 3, où le profilé annulaire (33, 68, 84) comprend un caisson avec un pont inférieur (42, 71, 93) orienté vers l'intérieur de la jante, un pont supérieur (41, 87) orienté vers l'extérieur de la jante et deux parois latérales (34, 35, 89, 90), **caractérisée par le fait que** le profilé présente deux rainures (39, 40, 69, 70, 91, 92) sur les bords du pont inférieur et que chacune des rainure loge un bobinage (43, 44, 73, 74, 87, 88) de fibre enduite de résine.

6. Jante selon la revendication 5, **caractérisée par le fait que** les rainures (39, 40, 69, 70, 91, 92) sont formées par un profil en gouttière qui prolonge le pont inférieur.

7. Jante selon la revendication 6, **caractérisée par le fait que** les rainures (39, 40, 91, 92) sont situés au niveau de deux renfoncements du profil de la jante.

8. Jante selon la revendication 2 ou 3, où le profilé annulaire (54, 100) comprend un caisson avec un pont inférieur (56) orienté vers l'intérieur de la jante, un pont supérieur (55) orienté vers l'extérieur de la jante et deux parois latérales (57, 58, 103, 104) qui se prolongent au-delà du pont supérieur pour former un canal de réception du pneu, **caractérisée par le fait que** le profilé présente deux rainures (63, 64, 101, 102) situées au sommet des parois latérales (57, 58, 103, 104) et que chacune des rainure loge un bobinage (63, 64, 106, 107) de fibre enduite de résine.

9. Jante selon la revendication 8, **caractérisée par le fait qu'**une partie de la paroi qui délimite les rainures forme un bourrelet (57a,58a) pour l'accrochage du pneu.

10. Jante selon la revendication 2 ou 3, où le profilé annulaire (100) comprend un caisson avec un pont inférieur orienté vers l'intérieur de la jante, un pont supérieur orienté vers l'extérieur de la jante et deux parois latérales (103, 104), **caractérisée par le fait que** le profilé présente une rainure (105) située dans la partie inférieure du profil par une extension en forme de point d'interrogation retourné pour avoir une ouverture orientée vers l'extérieur du cerceau, et que la rainure (105) loge un bobinage (108) de fibre enduite de résine.

11. Jante selon la revendication 2 ou 3 où le profilé annulaire (110) comprend un caisson avec un pont inférieur orienté vers l'intérieur de la jante, un pont supérieur orienté vers l'extérieur de la jante et deux parois latérales (112, 113), **caractérisée par le fait que** les parois latérales (111, 112) ont chacune un renfoncement (113, 114) qui débouche vers chacun des côtés du profilé et que chaque renfoncement (113, 114) loge un bobinage (115, 116) de fibre enduite de résine.

12. Jante selon la revendication 1, comprenant un pont supérieur (137) de forme concave, **caractérisée par le fait que** le bobinage (138) de fibre enduite de résine est formé sur la partie concave du pont.

13. Jante selon la revendication 1, comprenant un pont supérieur (141) ayant une gorge médiane (142), **caractérisée par le fait que** le bobinage (143) est formé au fond de la gorge (142)

14. Roue de vélo comprenant une jante (2), un moyeu (3) et des rayons (4), **caractérisée par le fait que** la jante est réalisée conformément à l'une quelconque des revendications 1 à 13 précédentes.

15. Procédé de fabrication d'une jante pour une roue de cycle, la jante comprenant un profilé annulaire (13, 213, 313, 413, 33, 54, 60, 68, 76, 84, 100, 110, 120, 135, 140), **caractérisée par le fait que** l'on enroule autour du profilé annulaire au moins un bobinage (19, 20, 219, 319, 419, 43, 44, 45, 46, 63, 64, 73, 74, 81, 82, 95, 96, 97, 98, 106, 107, 108, 115, 116, 124, 125, 138, 143) de fibre enduite de résine polymérisable formant un cerclage autour du profilé.

16. Procédé selon la revendication 15, **caractérisé par le fait que** l'on réalise le profilé annulaire avec une rainure annulaire (15,215,315,415,16,37,38,39,40,61, 62,69,70, 81, 82, 85, 86, 91, 92, 101, 102, 105, 121, 122), et que chaque rainure a une ouverture orientée vers l'extérieur de la jante et qu'on enroule le bobinage sur le profilé annulaire.

17. Procédé selon la revendication 16, **caractérisé par le fait que** l'on enroule simultanément plusieurs bobinages dans plusieurs rainures (15, 16, 37, 38, 39, 40) du profilé annulaire.

18. Procédé selon la revendication 15, **caractérisé par le fait que** l'on réalise des bobinages (115, 116) de fibre enduite de résine, et qu'on loge ensuite les bobinages dans des renfoncements (113, 114) du profilé annulaire (110).
